# EUROPÄISCHE PATENTSCHRIFT

(11) **EP 3 126 803 B1**
(45) Veröffentlichungstag und Bekanntmachung des Hinweises auf die Patenterteilung: **05.02.2020**
(21) Anmeldenummer: 15716709.9
(22) Anmeldetag: 01.04.2015
(51) Int. Cl.: G01L 5/00

(54) **VORSPANNVORRICHTUNG EINER KRAFTMESSVORRICHTUNG**
PRELOAD DEVICE OF A FORCE MEASUREMENT DEVICE
DISPOSITIF DE PRÉCONTRAINTE D'UN DISPOSITIF DE MESURE DE FORCE

(30) Priorität: 02.04.2014 CH 506142014
(43) Veröffentlichungstag der Anmeldung: 08.02.2017
(73) Patentinhaber: Kistler Holding AG, 8408 Winterthur (CH)
(72) Erfinder: THIEL, Rolf, CH-8400 Winterthur (CH)
(86) Internationale Anmeldenummer: PCT/CH2015/000051
(87) Internationale Veröffentlichungsnummer: WO 2015/149190

(56) Entgegenhaltungen:
- EP-A1- 1 726 935
- WO-A1-00/03218
- DE-A1- 10 242 250
- DE-A1-102006 017 174
- US-A- 3 577 112

## Beschreibung

### Technisches Gebiet

Die Erfindung betrifft eine Vorspannvorrichtung mit einer Aufnahmetasche zur Aufnahme eines Kraftsensors, welche mindestens zwei einander in einer Richtung senkrecht zur Längsachse gegenüberliegend angeordnete Krafteinleitplatten mit voneinander weg weisenden Krafteinleitflächen umfasst, eine Kraftmessvorrichtung, sowie ein Verfahren zur Einführung einer Kraftmessvorrichtung in eine Aussparung in einem oder zwischen mehreren Maschinenteilen bzw. einer Walze.

### Stand der Technik

Es sind Kraftmessvorrichtungen, umfassend eine Vorspannvorrichtung mit welcher ein Kraftsensor eingespannt ist, seit längerem und in unterschiedlichen Ausführungsformen bekannt. Derartige Kraftmessvorrichtungen können dynamische und quasistatische Kräfte in mindestens einer Raumrichtung angreifend messen. Bevorzugt werden piezoelektrische Kraftsensoren, meist sogenannte Piezo-Messunterlagsscheiben als Kraftsensor verwendet. Bekannte Kraftmessvorrichtungen werden in verschiedenen Anwendungen zur Messung von unterschiedlichen Kräften, beispielsweise in der Prozessüberwachung eingesetzt.

Aus der EP 0719405 B1 ist eine Kraftmessvorrichtung mit einer mehrteiligen Vorspannvorrichtung für einen Kraftsensor in Form einer Doppelkeilkraftmessvorrichtung bekannt. Damit sind Kräfte zwischen zueinander parallelen Maschinenteilen, vorzugsweise im Kraftnebenfluss messbar. Der orthogonale Abstand zwischen den parallelen Auflageflächen ist veränderbar. Zwei relativ zueinander verschiebbare Keile sind über eine Verstelleinrichtung miteinander verbunden. Keile und Kraftsensor sind in einer taschenförmigen Aussparung zwischen den Maschinenteilen lösbar befestigt eingespannt, wobei der Kraftsensor mit den Keilen eine bauliche Einheit bildet und im ersten Keil integriert ist. Eine erste Messfläche des Kraftsensors steht gegenüber dem ersten Keil über und bildet erste Auflageflächen. Mit der zweiten Messfläche ist der Kraftsensor im ersten Keil abgestützt. Die mehrteilige Vorrichtung soll bei geringer Bauhöhe einfach montierbar sein.

Die aus der WO2004/065924 bekannte Vorspannvorrichtung, welche zusammen mit einem Kraftsensor eine Kraftmessvorrichtung bildet, kann in Aussparungen mit parallelen Wänden, sowie in zylindersymmetrische Aussparungen eingeführt und unter Vorspannung befestigt werden, sodass eine flexiblere Kraftmessung erreichbar ist. Damit können beispielsweise Kräfte auf eine Walze durch Anordnung der Vorspannvorrichtung mit wirkverbundenem Kraftsensor in einer zylindrischen Bohrung in der Walze gemessen werden. Die Vorspannvorrichtung ist mehrteilig ausgeführt und weist einen Bolzen und einen Sockel mit mindestens einer Keilfläche auf. Auf der Keilfläche ist mindestens ein Klemmelement bewegbar angeordnet, welches mittels einer Spannschraube gegen eine Halteplatte gezogen wird. In einer besonderen Ausführungsform werden Federelemente eingesetzt, welche für einen Gegendruck von der Halteplatte auf das Klemmelement sorgen. Der Kraftsensor wird mit der derart kompakt ausgeführten Vorspannvorrichtung in einer Aussparung durch einfaches Anziehen der Spannschraube mit einem geeigneten Werkzeug lösbar unter Vorspannung fixiert, wobei sich die Höhe der Vorspannvorrichtung in einer Vorspannrichtung der Grösse der Aussparung durch das Einschrauben der Spannschraube anpassen lässt. Krafteinleitflächen der Vorspannvorrichtung schmiegen sich an Wände der jeweiligen Aussparung an, sodass Kräfte auf die Vorspannvorrichtung und den Kraftsensor übertragen werden. Durch Zugang von nur einer Richtung quer zur Vorspannrichtung kann die Vorspannvorrichtung befestigt und gelöst werden, sodass erst eine solche Vorspannvorrichtung in einer zylindrischen Bohrung in einer Walze anordbar und benutzbar ist.

Die WO 00/03218 A1 offenbart eine Kraftmesszelle mit einem Schwingsaiten-Messwandler. Eine Basis trägt eine rechteckige Platte mit einem mittig angebrachten kreisrunden Loch. Wirkt nun eine auf eine Oberkante der Platte Kraft, so verformt sich die Platte unter Aufbau von Schubspannung parallelogrammartig und auch das Loch verformt sich elliptisch. Der Schwingsaiten-Messwandler ist in einem Winkel von 45° zur Richtung der Verformung im Loch angeordnet.

Die DE 102006017174 A1 zeigt ein Kraftmesselement mit einem Bolzen und einer Hülse. Bolzen und Hülse sind voneinander beanstandet und über einen Steg miteinander verbunden. Unter Einleitung einer Kraft auf die Hülse verformt sich der Steg. Der Steg ist in Richtung der Krafteinleitung orientiert und eine am Steg angeordnete Sensorik misst die Verformung.

Die US 3577112 A offenbart eine Hochdruckmessanordnung mit einem Zylinder mit Gasdurchfluss und einen darin axial angeordneten Messfinger mit zentraler Aufnahmetasche für einen Dehnmesstreifen. Unter Druck verformt sich eine Wandung des Messfingers, welche Verformung vom Dehnmesstreifen gemessen wird.

Die EP 1736935 A1 bezieht sich auf eine Radachse mit einer Bohrung für einen gekapselten Dehnmessstreifen. Der gekapselte Dehnmessstreifen weist eine Buchse mit Zylinderflächen auf und ist unter Vorspannung in die Bohrung gesetzt. Dazu ist der Aussendurchmesser der Buchse geringfügig kleiner als der Innendurchmesser der Bohrung.

Die DE 10242250 A1 zeigt einen Aussenzylinder auf den eine Kraft wirkt und der eine Öffnung für einen Innenzylinder mit einem Kraftsensor aufweist. Der Aussenzylinder weist bereichsweise Verjüngungen auf, so dass unter Krafteinwirkung eine Abstandsverringerung zwischen dem Aussenzylinder und dem Innenzylinder erfolgt, was vom Kraftsensor erfasst wird.

Die aus dem bekannten Stand der Technik bekannten Vorspannvorrichtungen bzw. Kraftmessvorrichtungen, umfassend eine Vorspannvorrichtung mit eingebautem Kraftsensor sind mehrteilig ausgestaltet und können nur umständlich mittels Schraubwerkzeug eingeschraubt vorgespannt zwischen Wänden unterschiedliche geformter Aussparungen befestigt werden. Um den vorgespannten Zustand der Vorspannvorrichtung zu erreichen wird eine keilartig ausgestaltete Konstruktion verschraubt, wobei die Höhe der Vorspannvorrichtung eingestellt wird. Bei der Höhenverstellung wird die Spannschraube solange eingeschraubt, bis Flächen der Vorspannvorrichtung ausreichend gegen die Aussparungswände drücken und damit der Kraftsensor ausreichend vorgespannt eingeklemmt wird. Der Kraftsensor ist durch die bekannten Vorspannvorrichtungen unsymmetrisch, beispielsweise auf einer Seite durch die Vorspannvorrichtung und auf der gegenüberliegenden Seite über einen Bolzen gegen die Aussparungswand klemmbar angeordnet zu verschrauben. Beim Verkeilen bzw. Justieren der Keile durch eine Spannschraube wirken Reibungskräfte auf den Kraftsensor.

### Darstellung der Erfindung

Es soll eine Vorspannvorrichtung geschaffen werden, welche flexibel und vereinfacht in verschieden geformte Aussparungen platzierbar und darin einfach lösbar befestigbar ist. Beim Einführen der Vorspannvorrichtung sollen störende Reibungskräfte auf den Kraftsensor vermieden werden. Die Aussparung kann sich zwischen Maschinenteilen/in bzw. in einer zylindrischen Bohrung in einem Maschinenteil befinden. Der Erfindung liegt die Aufgabe zugrunde eine Vorspannvorrichtung zu erreichen, die ohne Schraubwerkzeug und ohne Verschraubung in der Aussparung befestigbar ist.

Diese Aufgabe wird durch die Formgebung der Vorspannvorrichtung nach Anspruch 1 gelöst, wobei mindestens ein elastisch biegbarer Bereich ausgestaltet ist. Damit kann die Vorspannvorrichtung beim Einschub in einen elastisch verspannten Einführzustand mit minimierter Vorrichtungshöhe gebracht werden und zwischen die Aussparungswände reibungsfrei eingeführt werden. Wenn die gewünschte Endposition erreicht ist, kann die Vorspannvorrichtung in einen elastisch gespannten Einbauzustand gebracht werden, sodass die Vorspannvorrichtung und der darin gelagerter Kraftsensor unter Vorspannung in der Aussparung in einer Messposition gehalten wird. Beim Einschub der Vorspannvorrichtung in einem elastisch verspannten Einführzustand wirken keine Reibungskräfte auf den Kraftsensor.

Im Gegensatz zum Stand der Technik kann auf eine Verschiebung von starren Klemmelementen, zum Beispiel von Keilen, verzichtet werden, sodass ein störendes Verklemmen derselben verhindert wird.

### Kurze Beschreibung der Zeichnungen

Im Folgenden wird die Erfindung unter Beizug der Zeichnungen näher erklärt.
- Figur 1: zeigt eine Schnittansicht einer Kraftmessvorrichtung, umfassend einen Kraftsensor, der in einer Vorspannvorrichtung lösbar befestigt gelagert ist, wobei die Kraftmessvorrichtung eingeklemmt in einem elastisch gespannten Einbauzustand in einer Aussparung zwischen zwei Maschinenteilen gelagert ist.
- Figur 2: zeigt einen Längsschnitt durch eine Kraftmessvorrichtung im entspannten Grundzustand vor dem Einführen in eine Aussparung.
- Figur 3: zeigt eine perspektivische Ansicht einer Vorspannvorrichtung allein in einem entspannten Grundzustand.
- Figur 4: zeigt eine Schnittansicht einer Kraftmessvorrichtung, wobei die Vorspannvorrichtung elastisch verspannt in einem Einführzustand gezeigt ist.
- Figur 5a und 5b: zeigen jeweils eine Schnittansicht einer Kraftmessvorrichtung, wobei die Vorspannvorrichtung jeweils durch zusätzliche Sicherungsmittel im elastisch gespannten Einbauzustand gehalten wird.
- Figur 6a: zeigt eine Schnittansicht einer Kraftmessvorrichtung in einer zylindersymmetrischen Aussparung in einer Walze in Richtung der Einführrichtung, während
- Figur 6b: eine perspektivische Ansicht einer Vorspannvorrichtung mit gewölbten Krafteinleitplatten in einem entspannten Grundzustand ausserhalb einer Aussparung zeigt.

### Wege zur Ausführung der Erfindung

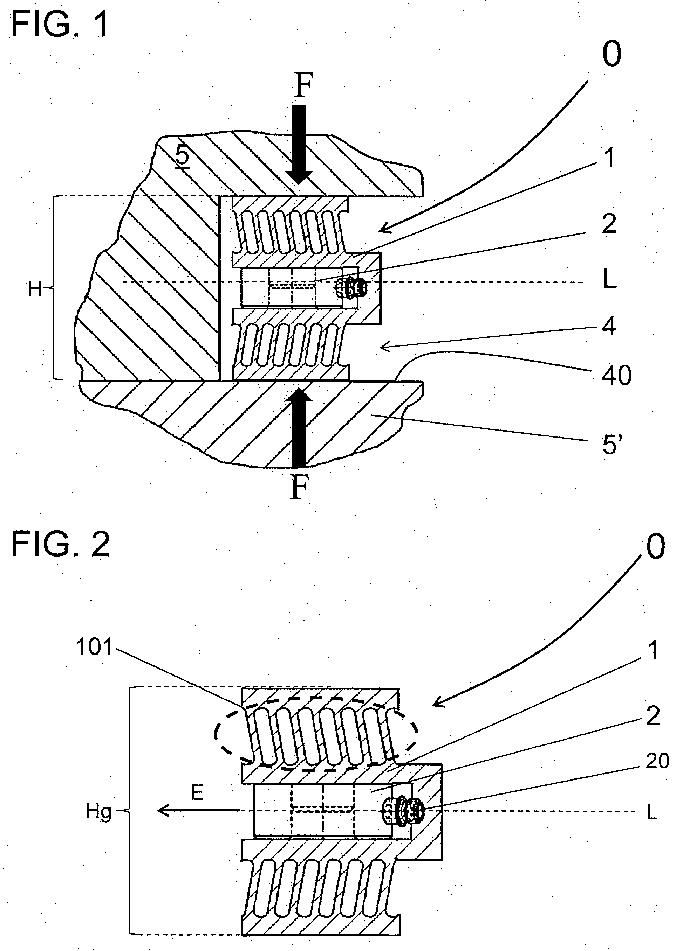

In Figur 1 ist eine Kraftmessvorrichtung 0 gezeigt, welche eine Vorspannvorrichtung 1 und einen Kraftsensor 2 umfasst. Die Vorspannvorrichtung 1 ist hier einstückig ausgeführt und in eine Aussparung 4 zwischen zwei Maschinenteilen 5, 5' eingebracht, geklemmt lösbar befestigt. Die Aussparung 4 wird von planen ebenen Aussparungswänden 40 gebildet, wobei der Abstand in Richtung der Krafteinleitung, gekennzeichnet durch die senkrecht zur Längsrichtung L wirkenden Kräfte F, der Höhe H der Vorspannvorrichtung 1 in einem elastisch gespanntem Einbauzustand entspricht. Die Vorspannung der Vorspannvorrichtung 1 ist baulich bedingt, da die Vorspannvorrichtung 1 in einem definierten Bereich elastisch biegbar ist und sich dadurch in die Aussparung 4 einführen lässt und dort gegen die Aussparungswände 40 klemmend lagerbar ist. Die auf die Maschinenteile 5, 5' quer zur Längsachse L und damit in eine Einspannrichtung wirkenden Kräfte F sind mittels eingeklemmt gehaltenen Kraftsensor 2 messbar.

Als Kraftsensor 2 wird hier beispielhaft eine Piezo-Messunterlagsscheibe 2 verwendet, welche ein mehrteiliges Gehäuse umfasst an welchem eine Anschlussvorrichtung 20 befestigt oder angeformt ist. Das Gehäuse ist in der Regel aus Stahl hergestellt und weist einen Deckel und einen Boden auf. Im Gehäuse sind hier zwei piezoelektrische Körper ringförmig ausgestaltet übereinander gestapelt angeordnet. Zwischen den piezoelektrischen Körpern, die jeweils als Ringkörper ausgestaltet sind, befindet sich eine Elektrode. Für die äussere Verkabelung der Piezo-Messunterlagscheibe 2 mit einer nicht dargestellten Messelektronik werden Anschlusskabel in Form von hochisolierenden Koaxialkabeln mit geringer Kapazität verwendet. Diese ebenfalls nicht dargestellten Anschlusskabel erzeugen bei minimaler Bewegung nur eine minimale Reibungselektrizität. Derartige Anschlusskabel für den industriellen Einsatz sind kommerziell erhältlich und einfach an die Anschlussvorrichtung 20 der Piezo-Messunterlagscheibe 2 anschliessbar, womit Ladungssignale der piezoelektrischen Körper abnehmbar sind. Damit die Piezo-Messunterlagsscheibe 2 Kräfte messen kann, müssen die Komponenten im Gehäuse in Einspannrichtung aufeinander drückend angeordnet und die Komponenten so unbewegbar im Gehäuse verschweisst sein.

Die Kraftmessvorrichtung 0 bzw. die Vorspannvorrichtung 1 weist in einem entspannten Grundzustand, wie in Figur 2 gezeigt, eine Höhe Hg in Einspannrichtung auf. In einer Einführrichtung E, quer zur Einspannrichtung ist die Vorspannvorrichtung 1 in eine Aussparung 4 einführbar. Damit die Vorspannvorrichtung 1 in eine Aussparung 4 einführbar ist, ist mindestens ein elastisch biegbarer Abschnitt 101 an der Vorspannvorrichtung 1 vorgesehen, welcher eine teilweise elastische Verbiegung der Vorspannvorrichtung 1 in Richtung der Einspannrichtung erlaubt. Der elastisch biegbare Abschnitt 101 erstreckt sich parallel zur Längsachse L, während bei elastischer Verbiegung eine Höhenvariation in Einspannrichtung und damit senkrecht zur Längsachse L auftritt.

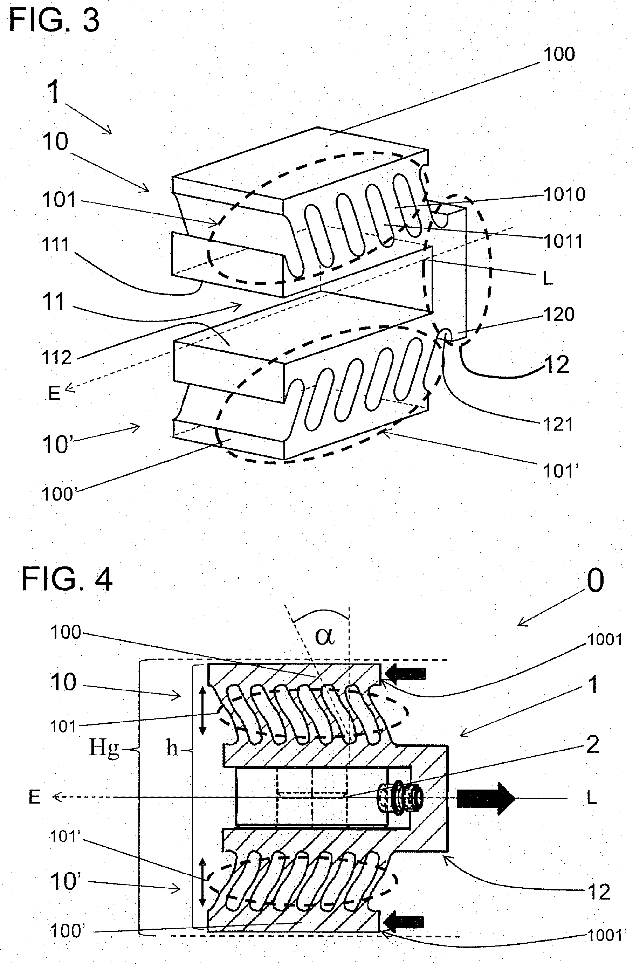

Eine in Figur 3 dargestellte konkrete Ausführungsform einer Vorspannvorrichtung 1 ist gabelförmig gestaltet, wobei von einem Werkzeugangreifabschnitt 12 hier zwei Arme 10, 10' in Richtung Längsachse L wegragend angeordnet sind. Zwischen den Armen 10, 10' ist eine Aufnahmetasche 11 angeordnet, in welche der Kraftsensor 2 einbringbar ist und lösbar gehalten wird. Die Aufnahmetasche 11 weist eine erste Wand 111 und eine zweite Wand 112 auf, zwischen denen der Kraftsensor 2 einklemmbar ist. Die Aufnahmetasche 11 ist derart geformt, dass die Wände 111, 112 Kräfte gleichmässig auf den eingeklemmten und damit spielfrei gelagerten Kraftsensor 2 übertragen. Da die beiden Arme 10, 10' gegeneinander in Richtung Einspannrichtung elastisch verbiegbar sind, kann der Kraftsensor 2 eingeklemmt in der Aufnahmetasche 11 von den planen Wänden 111, 112 mindestens teilweise umschlossen gehalten werden. Der Werkzeugangreifabschnitt 12 weist eine Zug-/Druckplatte 120 auf, welche mit einem nicht dargestellten Werkzeug wirkverbindbar ist. Durch Anformung eines Hinterschnitts 121 kann die Verbindung zwischen Werkzeugangreifabschnitt 12 und dem Werkzeug unterstützt werden.

Die Arme 10, 10' umfassen jeweils eine Krafteinleitplatte 100, 100', welche hier ebene Krafteinleitflächen aufweisen. An die Krafteinleitplatten 100, 100' schliesst sich der elastisch biegbare Abschnitt 101, 101' an, welcher von der Krafteinleitplatte 100, 100' in Richtung Aufnahmetasche 11 verläuft. Der mindestens eine elastisch biegbare Abschnitt 101 ist in einer Richtung senkrecht zur Längsachse L zwischen der Aufnahmetasche 11 und mindestens einer der Krafteinleitplatten 100 unlösbar befestigt angeordnet.

Erfindungsgemäß, ist der elastisch biegbare Abschnitt 101, 101' jeweils durch eine Mehrzahl von Lamellen 1010 gebildet, welche durch Langlöcher 1011 den elastisch biegbaren Abschnitt 101, 101' durchsetzend, beabstandet sind.

In Figur 4 wird eine Kraftmessvorrichtung 0 gezeigt, welche sich in einem elastisch verspannten Einführzustand befindet, wobei das Werkzeug zur Vereinfachung weggelassen wurde. An der Vorspannvorrichtung 1, genauer an Randabschnitten 1001, 1001' beider Krafteinleitplatten 100, 100' und am Werkzeugangreifabschnitt 12 wirken jeweils einander entgegen gerichtete Kräfte, die durch Pfeile angedeutet sind. Diese Kräfte werden von einem Benutzer aufgebracht, wobei bevorzugt ein Werkzeug verwendet wird. An den Randabschnitten 1001, 1001' wirken die Kräfte in Einführrichtung E, während am Werkzeugangreifabschnitt 12 entgegen der Einführrichtung E gezogen wird. Bei Wirken der beschriebenen Kräfte werden die elastisch biegbaren Abschnitte 101, 101' elastisch derart verbogen, dass der Abstand zwischen der Krafteinleitplatte 100, 100' und der Aufnahmetasche 11 verringert wird. Dadurch verringert sich die Aufbauhöhe der Vorspannvorrichtung 1 von der Höhe Hg im entspannten Grundzustand zu einer Höhe h im Einführzustand, wobei h entsprechend kleiner als Hg ist. Eine derart elastisch verformte Vorspannvorrichtung 1 kann in eine Aussparung 4 mit einer Höhe, die zwischen Hg und h liegt eingeführt werden.

Da die elastische Verformung der Arme 10, 10' keine Auswirkungen auf die Wände 111, 112 der Aufnahmetasche 11 hat, wirken keine Störkräfte auf den eingeklemmten Kraftsensor 2 beim Einführen der Vorspannvorrichtung 1. Wenn die Vorspannvorrichtung 1 in der gewünschten Messposition in der Aussparung 4 platziert ist, werden die Kräfte auf die Arme 10, 10' und den Werkzeugangreifabschnitt 12 auf Null verringert.

Der hier gezeigte elastisch biegbare Abschnitt 101 weist eine Mehrzahl in definierten Grenzen elastisch biegbarer Lamellen 1010 auf, welche in einem Winkel α Einspannrichtung orientiert gestaltet sind. Die Einspannrichtung ist senkrecht zur Längsachse L der Vorspannvorrichtung 1 orientiert. Entsprechend sind auch die Langlöcher 1011 zwischen den Lamellen 1010 gewinkelt angeordnet. Bevorzugt ist dieser Winkel α kleinergleich 10° von der Einspannrichtung abweichend gewählt. Wenn im elastisch verspannten Einführzustand eine Kraft auf die Krafteinleitplatte 100 wirkt verbiegen sich alle Lamellen 1010 etwa gleichförmig elastisch, wobei eine Höhendifferenz zwischen den unterschiedlichen Zuständen der Vorspannvorrichtung 1 resultiert.

Nach Wegfall der Kräfte versuchen die elastisch biegbaren Abschnitte 101, 101' in ihre ursprüngliche Form zurückzukehren, wobei die Abstände der Krafteinleitplatten 100, 100' zur Aufnahmetasche 11 durch Rückfederung soweit vergrössert werden, bis die Krafteinleitflächen der Krafteinleitplatten 100, 100' an den Aussparungswände 40 anliegen. Dabei ändert sich die Bauhöhe der Vorspannvorrichtung 1 von h bis zur Höhe H der Aussparung 4, gemäss Figur 1. Die Vorspannvorrichtung 1 bzw. die Kraftmessvorrichtung 0 ist entsprechend unter einer Vorspannung aufgrund der Rückfederung der elastisch biegbaren Abschnitte 101, 101' formschlüssig lösbar in der Aussparung 4 befestigt.

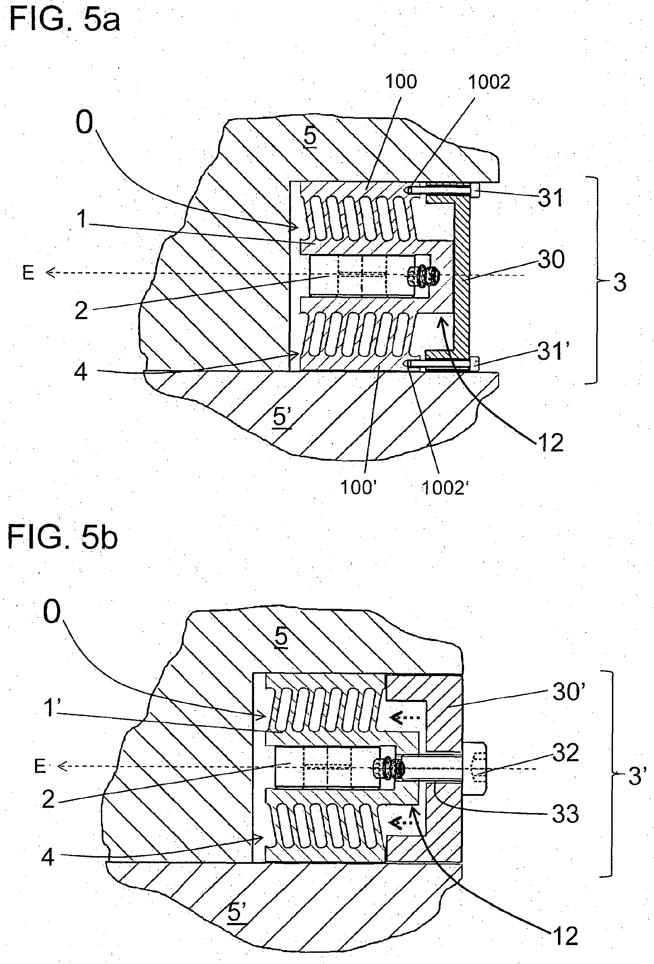

Nach Platzierung der Kraftmessvorrichtung 0 in einer Aussparung 4 und der vorgespannten Befestigung an einer Messposition, können optionale Sicherungsmittel 3 eingesetzt werden, um ein Verrutschen der Kraftmessvorrichtung 0 in der Aussparung 4 zu verhindern und eine konstante Vorspannung zu gewährleisten.
Wie beispielhaft in Figur 5a gezeigt, können die Sicherungsmittel 3 einen Balken 30 umfassen, der auf den Werkzeugangreifabschnitt 12 in Einführrichtung E wirkend auf die Vorspannvorrichtung 1 aufsetzbar ist. Zur Befestigung des Balkens 30 an der Vorspannvorrichtung 1 sind Schrauben 31, 31' vorgesehen, welche den Balken 30 im Randbereich durchsetzen und in Gewindebohrungen 1002 in den Krafteinleitplatten 100, 100' lösbar befestigt sind. Durch Anziehen der Schrauben 31, 31' kann die Vorspannung der Vorspannvorrichtung 1 durch Auslenkung bzw. Rückfederung der Lamellen 1010 der elastisch biegbaren Abschnitte 101, 101' gesteigert werden, wobei die Steifigkeit der Vorspannvorrichtung 1 in Richtung der Krafteinleitung F bzw. Einspannrichtung erhöht werden kann.

In einer etwas abgewandelten Form der Sicherungsmittel 3' und der Vorspannvorrichtung 1', wird gemäss Figur 5b ein abgewandelter Balken 30', eine zentrische Durchgangsbohrung mit Innengewinde 33 aufweisend, mittels einer zentrischen Schraube 32 in einem Gewinde im Werkzeugangreifabschnitt 12 lösbar befestigt. Der Balken 30' kann mittels der zentrischen Schraube 32 in Pfeilrichtung auf die Krafteinleitplatten 100 drückend geschraubt werden. Auch hier ist die Vorspannung durch Befestigung des Balkens 30' einstellbar. Die Ausrichtung der Lamellen 1010 ist in der Vorspannvorrichtung 1' gemäss Figur 5b geändert, wobei die elastisch biegbaren Abschnitte 101 bei Zug entgegen der Einführrichtung E an den Krafteinleitplatten 100 und gleichzeitigem Druck in Einführrichtung E auf den Werkzeugangreifabschnitt 12 elastisch verformbar sind. Um eine derart gestaltete Vorspannvorrichtung 1' einzuführen bzw. die Kräfte für die Höhenreduktion aufzubringen, müsste ein Werkzeug entsprechend anders gestaltet sein, sodass Zugkräfte auf die Krafteinleitplatten 100 und eine Druckkraft auf den Werkzeugangreifabschnitt 12 bzw. eine nicht dargestellte Zug-/Druckplatte anbringbar sind.

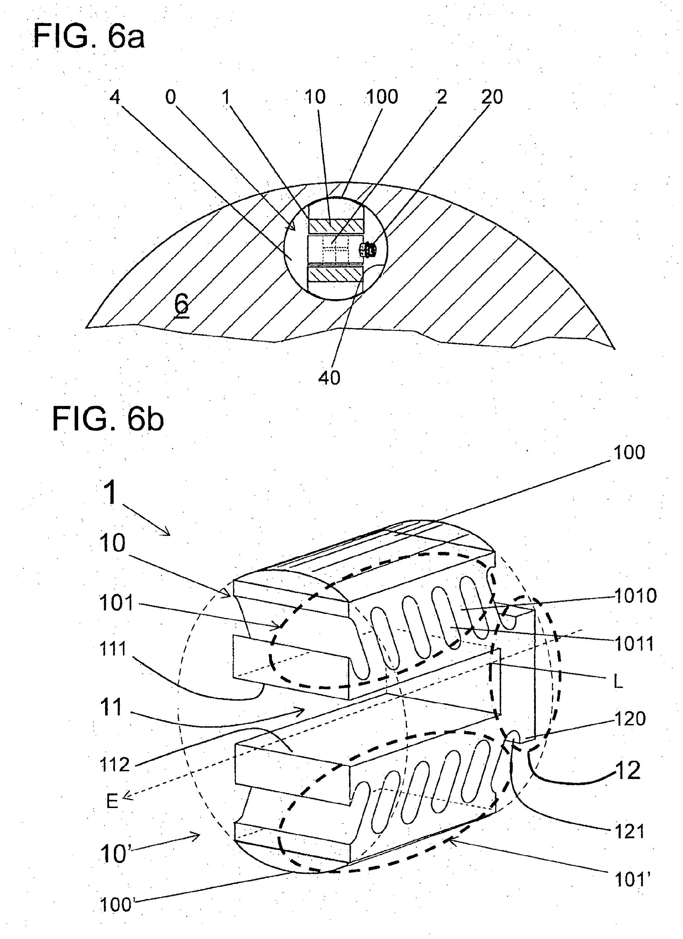

Wie in Figur 6a gezeigt, kann die Vorspannvorrichtung 1 derart gestaltet sein, dass sie in einer zylindrischen Aussparung 4 in einer Walze 6 angeordnet werden kann, wobei radial auf die Walze 6 wirkende Kräfte messbar sind. Mit Blick auf die Einführrichtung E in die Aussparung 4 erkennt man, dass die Krafteinleitplatten 100 der Arme 10 gewölbt gestaltete Krafteinleitflächen aufweisen. Die Arme 10 sind ansonsten wie oben erläutert geformt. Die Krafteinleitflächen schmiegen sich segmenthaft an die Aussparungswand 40 an. Der Kraftfluss wird damit präzise in die Kraftmessvorrichtung 0 bzw. den Kraftsensor 2 eingeleitet.

Die Vorspannvorrichtung 1 allein, ohne Kraftsensor ist in Figur 6b zur Veranschaulichung einem entspannten Grundzustand dargestellt. Da die Krafteinleitflächen gewölbt ausgestaltet sind, kann eine Kraftübertragung in einer zylindrisch geformten Aussparung erreicht werden.

Vorspannvorrichtung 1 ist bevorzugt einstückig oder monolithisch und entsprechend als Vorspannelement 1 ausgestaltet. Die einzelnen Abschnitte können aber auch aus voneinander trennbaren Elementen bestehen, welche miteinander zu einer Vorspannvorrichtung 1 verbunden werden.

Die Aufnahmetasche 11 ist hier zentrisch zwischen den beiden Armen 10, 10' ausgespart bzw. angeordnet, womit eine zur Längsachse L spiegelsymmetrische Vorspannvorrichtung 1 erreichbar ist. Sollte aber eine Vorspannvorrichtung 1 mit nur einem elastisch biegbarem Abschnitt 101 gestaltet werden, kann die Aufnahmetasche 11 auch unsymmetrisch zur Längsachse L im Körper der Vorspannvorrichtung 1 platziert sein.

Die Gestaltung der beiden oder nur eines elastisch biegbaren Abschnittes 101, 101' kann auch anders als hier detailliert gezeigt ausgeführt sein. Beispielsweise könnte der elastisch biegbare Abschnitt 101 in Form einer Blattfeder ausgestaltet sein, wobei der Abstand der Krafteinleitplatte 100 relativ zur Aufnahmetasche 11 ebenso elastisch in gewissen Grenzen veränderbar ist.

Die Vorspannvorrichtung 1 kann aus metallischen Werkstoffen, aber auch aus einem Kunststoff oder einem Gummi bestehen, wobei das Material und die Gestaltung der Vorspannvorrichtung 1 auf die zu messenden Kräfte in der Einspannrichtung abgestimmt sein müssen.

Als mögliches Werkzeug zur Einführung der Vorspannvorrichtung 1 in eine gewünschte Aussparung 4 kann eine Spannzange eingesetzt werden.

### Bezugszeichenliste

- 0: Kraftmessvorrichtung
- 1: Vorspannvorrichtung / Vorspannelement (einstückig)
10 Arm
100 Krafteinleitplatte mit Krafteinleitfläche
1001 Randabschnitt
1002 Gewindebohrung
101 elastisch biegbarer Abschnitt
1010 Lamellen
1011 Langlöcher
11 Aufnahmetasche
111 erste Wand
112 zweite Wand
12 Werkzeugangreifabschnitt
120 Zug-/Druckplatte
121 Hinterschnitt
122 Innengewinde
- H: Höhe im elastisch gespannten Einbauzustand
- Hg: Höhe im entspannten Grundzustand
- h: Höhe im Einführzustand
- 2: Kraftsensor
- 3: Sicherungsmittel
30 Balken
31 Schraube
32 zentrische Schraube
33 Innengewinde
- 4: Aussparung
40 Aussparungswand
- 5: Maschinenteil
- 6: Walze
- E: Einführrichtung / Montagerichtung
- F: Einspannrichtung und Belastungsrichtung

## Patentansprüche

1. Vorspannvorrichtung (1) mit einer Aufnahmetasche (11) zur Aufnahme eines Kraftsensors (2), welche mindestens zwei einander in einer Richtung senkrecht zur Längsachse (L) gegenüberliegend angeordnete Krafteinleitplatten (100, 100') mit voneinander weg weisenden Krafteinleitflächen umfasst,
sodass die Vorspannvorrichtung (1) durch Bildung einer Vorspannung zwischen den Krafteinleitflächen der Krafteinleitplatten (100, 100') in einer Aussparung (4) in einem oder zwischen mehreren Maschinenteilen (5, 5') bzw. einer Walze (6) derart anordbar ist, dass äussere Kräfte (F) auf den Kraftsensor (2) innerhalb der Aufnahmetasche (11) übertragbar sind,
wobei die Vorspannvorrichtung (1) einen von der Aufnahmetasche (11) in Richtung der Längsachse (L) beabstandeten Werkzeugangreifabschnitt (12) aufweist und mindestens ein elastisch biegbarer Abschnitt (101) zwischen der Aufnahmetasche (11) und mindestens einer der Krafteinleitplatten (100) unlösbar angeordnet ist,
wobei durch elastische Verbiegung des mindestens einen elastisch biegbaren Abschnittes (101)
eine Höhe (Hg) eines entspannten Zustands der Vorspannvorrichtung (1) auf eine Höhe (h)in einem Einführzustand der Vorspannvorrichtung (1)durch Anwendung von Kräften auf mindestens eine der Krafteinleitplatten (100, 100') und den Werkzeugangreifabschnitt (12) in jeweils unterschiedliche Richtungen parallel zur Längsachse (L) verringerbar ist,
**dadurch gekennzeichnet, dass**
der mindestens eine elastisch biegbare Abschnitt (101, 101') durch eine Mehrzahl von Lamellen (1010) und Langlöchern (1011), welche von der Krafteinleitplatte (100, 100') in Richtung Aufnahmetasche (11) verlaufen, gebildet ist.

2. Vorspannvorrichtung (1) nach Anspruch 1, wobei beide Krafteinleitplatten (100, 100') mit jeweils einem elastisch biegbaren Abschnitt (101, 101') wirkverbunden sind.

3. Vorspannvorrichtung (1) nach einem der vorhergehenden Ansprüche, wobei die Vorspannvorrichtung (1) einstückig in Form eines Vorspannelementes (1) ausgeführt ist.

4. Vorspannvorrichtung (1) nach Anspruch 3, wobei die Vorspannvorrichtung (1) aus einem metallischen Werkstoff oder einem Kunststoff hergestellt ist.

5. Vorspannvorrichtung (1) nach einem der vorhergehenden Ansprüche, wobei die Krafteinleitplatten (100, 100') gewölbt geformte Krafteinleitflächen aufweisen, sodass die Vorspannvorrichtung (1) in eine zylindrisch geformte Aussparung (4) einführbar ist.

6. Vorspannvorrichtung (1) nach Anspruch 1 wobei die elastisch biegbarer Lamellen (1010) und entsprechend die Langlöcher (1011) in einem Winkel α zur Einspannrichtung orientiert gestaltet sind.

7. Vorspannvorrichtung (1) nach Anspruch 6, wobei der Winkel α kleiner gleich 10° gewählt ist.

8. Vorspannvorrichtung (1) nach einem der vorhergehenden Ansprüche, wobei der Werkzeugangreifabschnitt (12) eine Zug-/Druckplatte (120) aufweist, welche mit einem Werkzeug einfach wirkverbindbar ist.

9. Vorspannvorrichtung (1) nach einem der vorhergehenden Ansprüche, wobei vom Werkzeugangreifabschnitt (12) zwei Arme (10, 10') mit darin gebildeten elastisch biegbaren Abschnitten (101, 101') ausgehen.

10. Vorspannvorrichtung (1) nach einem der vorhergehenden Ansprüche, wobei die Aufnahmetasche (11) zentrisch im Körper der Vorspannvorrichtung (1) ausgespart ist, sodass eine zur Längsachse (L) spiegelsymmetrisch geformte Vorspannvorrichtung (1) erreicht ist.

11. Kraftmessvorrichtung (0), umfassend eine Vorspannvorrichtung nach einem der vorhergehenden Ansprüche und einen in der Aufnahmetasche (11) gelagerten Kraftsensor (2).

12. Kraftmessvorrichtung (0) nach Anspruch 11, wobei die Vorspannvorrichtung (1) durch Sicherungsmittel (3, 3') unterstützt in der Aussparung (4) lösbar befestigbar ist.

13. Kraftmessvorrichtung (0) nach Anspruch 12, wobei als Sicherungsmittel (3, 3') ein Balken (30) und mindestens eine Schraube (31, 31') wird, wobei die Schrauben (31, 31') jeweils in einer Gewindebohrung (1002, 1002') in einem Randabschnitt (1001, 1001') oder im Werkzeugangreifabschnitt (12) fixierbar sind.

14. Verfahren zur Einführung einer Kraftmessvorrichtung (0) gemäss einem der Ansprüche 11 bis 13 in eine Aussparung (4) in einem oder zwischen mehreren Maschinenteilen (5, 5') bzw. einer Walze (6),
**gekennzeichnet durch** die Schritte:
Kraftwirkung auf mindestens eine Krafteinleitplatte (100) und den Werkzeugangreifabschnitt (12) in entgegengesetzte Richtungen parallel zur Längsachse (L) der Vorspannvorrichtung (1), sodass eine elastische Verbiegung des mindestens einen elastisch biegbaren Abschnittes (101) erfolgt und
zeitgleiche Einführung der Kraftmessvorrichtung (0) in die Aussparung (4) in eine Einführrichtung, bevor die Kraftwirkung aufgehoben wird und
anschliessend durch elastische Rückfederung des mindestens einen elastisch biegbaren Abschnittes (101) die Vorspannvorrichtung (1) unter Vorspannung in einer Einspannrichtung senkrecht zur Einführrichtung eingespannt in der Aussparung (4) gehalten wird.

## Claims

1. A preload device (1) with a receiving pocket (11) for receiving a force sensor (2), wherein said preload device comprises at least two force introduction plates (100, 100'), which are arranged opposite of one another in a direction extending perpendicular to the longitudinal axis (L) and have force introduction surfaces that point away from one another,
such that the preload device (1) can be arranged in a recess (4) in one or between multiple machine parts (5, 5') or in a roller (6) by generating a preload between the force introduction surfaces of the force introduction plates (100, 100') in such a way that external forces (F) can be transmitted to the force sensor (2) within the receiving pocket (11),
wherein the preload device (1) features a tool engagement section (12) that is spaced apart from the receiving pocket (11) in the direction of the longitudinal axis (L) and at least one elastically flexible section (101) is inseparably arranged between the receiving pocket (11) and at least one of the force introduction plates (100),
wherein an elastic deflection of the at least one elastically flexible section (101) makes it possible to reduce a height (Hg) in a relaxed state of the preload device (1) to a height (h) in an installation state of the preload device (1) by exerting forces upon at least one of the force introduction plates (100, 100') and the tool engagement section (12) in respectively different directions parallel to the longitudinal axis (L),
**characterized in that** the at least one elastically flexible section (101, 101') is formed by a plurality of lamellae (1010) and oblong holes (1011) extending from the force introduction plate (100, 100') in the direction of the receiving pocket (11).

2. The preload device (1) according to claim 1, wherein both force introduction plates (100, 100') respectively are functionally connected to an elastically flexible section (101, 101').

3. The preload device (1) according to one of the preceding claims, wherein the preload device (1) is realized in one piece in the form of a preload element (1).

4. The preload device (1) according to claim 3, wherein the preload device (1) is made of a metallic material or a plastic.

5. The preload device (1) according to one of the preceding claims, wherein the force introduction plates (100, 100') have curved force introduction surfaces such that the preload device (1) can be inserted into a cylindrically shaped recess (4).

6. The preload device (1) according to claim 1, wherein the elastically flexible lamellae (1010) and accordingly the oblong holes (1011) are aligned at an angle α relative to the clamping direction.

7. The preload device (1) according to claim 6, wherein the angle α amounts to 10° or less.

8. The preload device (1) according to one of the preceding claims, wherein the tool engagement section (12) features a tension/pressure plate (120) that easily can be functionally connected to a tool.

9. The preload device (1) according to one of the preceding claims, wherein two arms (10, 10') with elastically flexible sections (101, 101') formed therein originate from the tool engagement section (12).

10. The preload device (1) according to one of the preceding claims, wherein the receiving pocket (11) is centrally recessed in the body of the preload device (1) such that a preload device (1) with a mirror-symmetrical shape referred to the longitudinal axis (L) is formed.

11. A force-measuring device (0) comprising a preload device according to one of the preceding claims and a force sensor (2) fixed in the receiving pocket (11).

12. The force-measuring device (0) according to claim 11,
wherein the preload device (1) can be separably mounted in the recess (4) with the aid of securing means (3, 3').

13. The force-measuring device (0) according to claim 12,
wherein the securing means (3, 3') used consists of a beam (30) and at least one screw (31, 31'), and wherein the screws (31, 31') can be respectively fixed in a threaded bore (1002, 1002') in an edge section (1001, 1001') or in the tool engagement section (12).

14. A method for mounting a force-measuring device (0) according to one of claims 11-13 in a recess (4) in one or between multiple machine parts (5, 5') or in a roller (6),
**characterized by** the following steps:
exerting a force upon at least one force introduction plate (100) and the tool engagement section (12) in opposite directions parallel to the longitudinal axis (L) of the preload device (1) such that an elastic deflection of the at least one elastically flexible section (101) takes place and
simultaneously inserting the force-measuring device (0) into the recess (4) in an inserting direction before the force ceases to be exerted and
subsequently clamping the preload device (1) in the recess (4) perpendicular to the inserting direction under preload in a clamping direction due to the elastic resilience of the at least one elastically flexible section (101).

## Revendications

1. Dispositif de précontrainte (1) muni d'une poche de réception (11) pour recevoir un capteur de force (2) et comprenant au moins deux plaques d'introduction de force (100, 100') positionnées en vis-à-vis l'une de l'autre dans une direction perpendiculaire à l'axe longitudinal (L) avec les faces d'introduction de force orientées dans des directions opposées,
d'une telle manière que le dispositif de précontrainte (1) puisse être agencé dans un évidement (4) dans une pièce de machine ou entre plusieurs pièces de machine (5, 5') ou dans un rouleau (6) de sorte que des forces (F) externes puissent être transmises sur le capteur de force (2) à l'intérieur de la poche (11),
ledit dispositif de précontrainte (1) comprenant une portion d'attaque d'outil (12) espacée de la poche de réception (11) dans la direction de l'axe longitudinal (L) et
au moins une portion (101) élastiquement flexible agencée de façon indétachable entre la poche de réception (11) et au moins l'une des plaques d'introduction de force (100), dans lequel par flexion élastique de la au moins une portion élastiquement flexible (101) par l'application de forces sur au moins l'une des plaques d'introduction de force (100, 100') et sur la portion d'attaque d'outil (12) dans des directions différentes parallèlement à l'axe longitudinal (L), une hauteur (Hg) d'un état détendu du dispositif de précontrainte (1) peut être réduite à une hauteur (h) d'un état d'introduction,
**caractérisé en ce que**
la ou les portions élastiquement flexibles (101, 101') sont formées d'une pluralité de lamelles (1010) et des trous oblongs (1011) s'étendant de la plaque d'introduction de force (100) vers la poche de réception (11) .

2. Dispositif de précontrainte (1) selon la revendication 1, dans lequel les deux plaques d'introduction de force (100, 100') sont respectivement connectées fonctionnellement à une portion élastiquement flexible (101, 101').

3. Dispositif de précontrainte (1) selon l'une quelconque des revendications précédentes, dans lequel ledit dispositif de précontrainte (1) est réalisée d'une seule pièce sous forme d'un élément de précontrainte (1).

4. Dispositif de précontrainte (1) selon la revendication 3, dans lequel le dispositif de précontrainte (1) est fabriqué d'un matériau métallique ou plastique.

5. Dispositif de précontrainte (1) selon l'une quelconque des revendications précédentes, dans lequel les plaques d'introduction de force (100, 100') comportent des faces d'introduction de force d'une forme cintrée de sorte que le dispositif de précontrainte (1) peut être inséré dans un évidement (4) de forme cylindrique.

6. Dispositif de précontrainte (1) selon la revendication 1, dans lequel desdites lamelles (1010) élastiquement flexibles et donc les trous oblongs (1011) sont formés de manière orientés à un angle α vers la direction de serrage.

7. Dispositif de précontrainte (1) selon la revendication 6, dans lequel l'angle α est choisi pour être inférieur ou égal à 10°.

8. Dispositif de précontrainte (1) selon l'une quelconque des revendications précédentes, dans lequel la portion d'attaque d'outil (12) comporte une plaque de traction/de pression (120) facilement raccordable fonctionnellement à un outil.

9. Dispositif de précontrainte (1) selon l'une quelconque des revendications précédentes, dans lequel deux branches (10, 10') avec des portions (101, 101') élastiquement flexibles formées dans celles-ci s'éloignent de la portion d'attaque d'outil (12).

10. Dispositif de précontrainte (1) selon l'une quelconque des revendications précédentes, dans lequel la poche de réception (11) est évidée de manière centrée dans le corps du dispositif de précontrainte (1) pour obtenir un dispositif de précontrainte (1) en symétrie miroir par rapport à l'axe longitudinale (L).

11. Appareil de mesure de force (0) comprenant un dispositif de précontrainte selon l'une quelconque des revendications précédentes ainsi qu'un capteur de force (2) logé dans la poche de réception (11).

12. Appareil de mesure de force (0) selon la revendication 11, dans lequel le dispositif de précontrainte (1) est fixé de manière amovible et supporté par des moyens de fixation (3, 3') dans l'évidement (4).

13. Appareil de mesure de force (0) selon la revendication 12, dans lequel desdits moyens de fixation (3, 3') sont une barre (30) et au moins une vis (31, 31'), lesdites vis (31, 31') pouvant être fixées respectivement dans un alésage taraudé (1002, 1002') ménagé dans une partie périphérique (1001, 1001') ou dans la portion d'attaque d'outil (12).

14. Procédé d'introduction d'un appareil de mesure de force (0) selon l'une quelconque des revendications 11 à 13 dans un évidement (4) dans une pièce de machine ou entre plusieurs pièces de machine (5, 5') ou dans un rouleau (6),
**caractérisé par** les étapes consistant à:
une application d'une force sur au moins une plaque d'introduction de force (100) et la portion d'attaque d'outil (12) en directions opposées parallèlement à l'axe longitudinale (L) du dispositif de précontrainte (1) de sorte qu'une flexion élastique de la au moins une portion (101) élastiquement flexible est obtenue et
l'introduction simultanée de l'appareil de mesure de force (0) dans l'évidement (4) dans une direction d'introduction avant que ladite force a cessée d'être appliquée et
puis par retour élastique de la au moins une portion (101) élastiquement flexible le dispositif de précontrainte (1) est maintenu sous précontrainte dans l'évidement (4) dans une direction de serrage perpendiculairement à la direction d'insertion.
